# EUROPÄISCHE PATENTANMELDUNG

(11) **EP 2 527 673 A1**
(43) Veröffentlichungstag der Anmeldung: **28.11.2012**
(21) Anmeldenummer: 12160245.2
(22) Anmeldetag: 20.03.2012
(51) Int. Cl.: F16C 19/52, F16C 35/073, H02K 5/173

(54) **Lageranordnung einer elektrischen Maschine**

(30) Priorität: 26.05.2011 DE 102011076530
(71) Anmelder: ZF Friedrichshafen AG, 88038 Friedrichshafen (DE)
(72) Erfinder: Scharr, Stephan, 88045 Friedrichshafen (DE); Wehlen, Timo, 88045 Friedrichshafen (DE)

(57) **Zusammenfassung**

Es wird eine Lageranordnung einer elektrischen Maschine mit einem Stator (1) und einem Rotor (2) vorgeschlagen, wobei der Rotor (2) mit einer Rotorwelle (3) über Lager (4, 4A) gehäuseseitig gelagert ist, und wobei die Lager (4, 4A) thermisch von der Rotorwelle (3) zum Reduzieren des Wärmeüberganges getrennt sind.

## Beschreibung

Die vorliegende Erfindung betrifft eine Lageranordnung einer elektrischen Maschine gemäß der im Oberbegriff des Patentanspruches 1 näher definierten Art.

Beispielsweise aus der Druckschrift DE 10 2009 031 869 A1 ist eine Achsantriebseinheit bekannt, die eine elektrische Maschine umfasst, welche mit einem Achsdifferentialgetriebe über ein Übersetzungsgetriebe antriebsverbunden ist. Die elektrische Maschine besitzt einen Stator und einen Rotor, der mit einer Rotorwelle drehbar in einem Gehäuse der elektrischen Maschine gelagert ist.

Beim Betrieb der elektrischen Maschine entstehen in Abhängigkeit der geforderten Leistung und des Wirkungsgrades Verluste, die dazu führen, dass die elektrische Maschine und die angrenzenden Bauteile erwärmt werden. Besonders kritisch sind hierbei die Erwärmungen der Rotorwelle und die damit verbundene Erwärmung der Lageranordnung der Rotorwelle. Durch die Erwärmung der Lageranordnung wird in nachteiliger Weise die Lebensdauer der Lageranordnung reduziert.

Der vorliegenden Erfindung liegt die Aufgabe zu Grunde, eine Lageranordnung einer elektrischen Maschine der eingangs beschriebenen Gattung insbesondere hinsichtlich der Lebensdauer zu verbessern.

Somit wird eine Lageranordnung einer elektrischen Maschine mit zum Beispiel zumindest einem Stator und zumindest einem Rotor vorgeschlagen, wobei der Rotor mit einer Rotorwelle oder dergleichen drehbar über Lager gehäuseseitig aufgenommen ist. Erfindungsgemäß ist vorgesehen, dass die verwendeten Lager von der Rotorwelle zum Reduzieren des Wärmeüberganges zwischen der Rotorwelle und den Lagern thermisch getrennt bzw. thermisch isoliert sind.

Auf diese Weise wird bei der erfindungsgemäßen Lageranordnung der Wärmeübergang von der Rotorwelle zu den Lagern deutlich reduziert. Demzufolge kann die Lebensdauer der Lager verlängert werden, ohne die Kühlung zu verbessern oder hochwertigere Lager einzusetzen, wodurch mit der vorgeschlagenen Lageranordnung die Herstellungskosten verringert werden.

Zur thermischen Trennung zwischen der Rotorwelle und den verwendeten Lagern kann ein geeignetes Isoliermaterial oder dergleichen eingesetzt werden. Dazu können die der Rotorwelle zugewandten Bereiche oder Kontaktflächen der Lager zur Wärmeisolierung mit dem Isoliermaterial versehen werden. Dadurch, dass das Isoliermaterial einen entsprechenden Wärmeübergangskoeffizienten besitzt, wird der Wärmeübergang entsprechend behindert. Das Isoliermaterial kann zusätzlich auch bei ausgewählten Press- und/oder Übergangspassungen eingesetzt werden, um die Isolierungsfunktion weiter zu erhöhen.

Im Rahmen einer besonders vorteilhaften Ausführungsvariante der Erfindung kann vorgesehen sein, dass als Isoliermaterial ein Klebstoff verwendet wird, der neben der Isolierfunktion auch eine Fixierfunktion gewährleistet, so dass beispielsweise bei Fest-Los-Lagern ein zusätzlich erforderlicher Sicherungsring zur Realisierung des Festlagers entfallen kann. Beispielsweise kann eine Schrumpfklebung zwischen dem jeweiligen Lager und der Rotorwelle vorgesehen werden. Insbesondere bei Hochdrehzahlanwendungen und der dadurch wirkenden Fliehkräfte wird die Betriebssicherheit der elektrischen Maschine weiter erhöht, da Sicherungsringe diesen Anforderungen nur bedingt standhalten können.

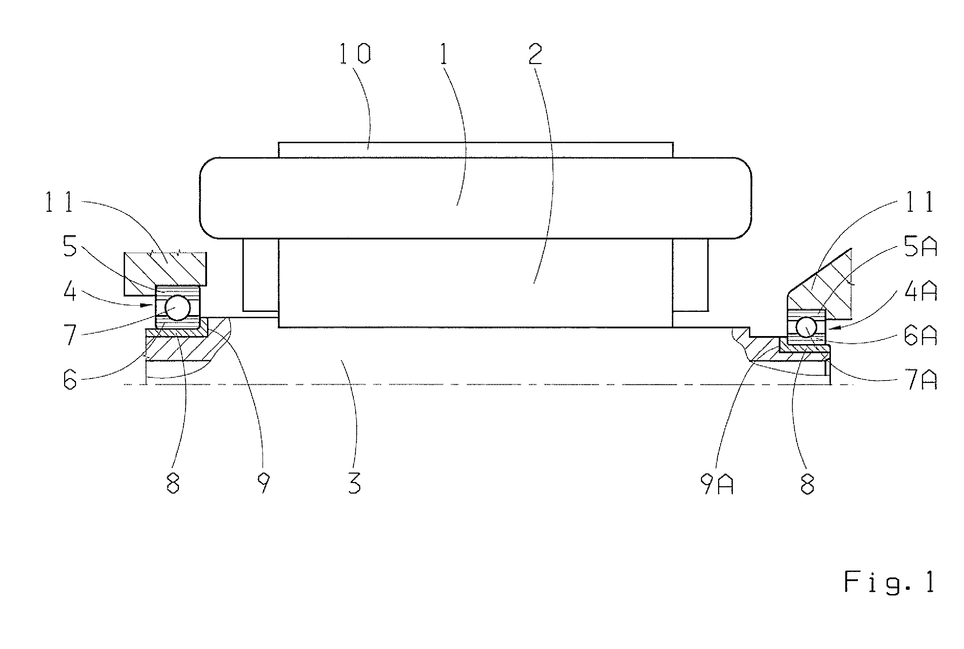

Die vorliegende Erfindung wird anhand der Zeichnung weiter erläutert. Die einzige Figur der Erfindung zeigt eine schematische Ansicht einer möglichen Ausführungsvariante einer erfindungsgemäßen Lageranordnung mit einer elektrischen Maschine exemplarisch.

Die elektrische Maschine umfasst einen Stator 1, der vorzugsweise mit einem Kühlmantel 10 versehen ist. Innerhalb des Stators 1 ist ein mit einer Rotorwelle 3 rotierender Rotor 2 vorgesehen. Die Rotorwelle 3 ist über eine Lageranordnung an einem nur angedeuteten Gehäuse 11 der elektrischen Maschine drehbar gelagert. Als Lageranordnung sind Wälzlager 4, 4A vorgesehen. Die Wälzlager 4, 4A weisen jeweils einen Lagerinnenring 6, 6A und einen Lageraußenring 5, 5A auf, zwischen denen Wälzkörper 7, 7A aufgenommen sind.

Erfindungsgemäß ist vorgesehen, dass die Wälzlager 4, 4A thermisch von der Rotorwelle 3 zum Reduzieren des Wärmeüberganges getrennt sind. Dazu ist ein Isoliermaterial 8 zwischen den Lagerinnenringen 6, 6A und der Rotorwelle 3 vorgesehen. Vorzugsweise wird als Isoliermaterial 8 ein Klebstoff verwendet, der neben der Isoliereigenschaft zudem den Lagerinnenring 6, 6A an der Rotorwelle 3 fixiert. Zur Reduzierung des Wärmeüberganges wird der Kleber jeweils auf die Kontaktflächen zwischen dem Lagerinnenring 6, 6A und der Rotorwelle 3 aufgebracht.

Somit kann bei der elektrischen Maschine, die beispielsweise zum Antrieb eines Achsantriebes oder eines Einzelradantriebes bei einem Fahrzeug eingesetzt werden kann, die Wärmeisolierung zwischen der Lageranordnung und der Rotorwelle 3 deutlich reduziert werden und somit die Lebensdauer der Rotorwellenlagerung erhöht werden. Insbesondere bei Hochdrehzahl-Maschinen, die zum Beispiel als A-synchronmaschinen oder auch als permanenterregte Synchronmaschinen ausgeführt werden können, kann durch die Verwendung des Klebstoffes als Isoliermaterial die Betriebssicherheit erhöht werden, da auf die sonst erforderlichen Sicherungsringe verzichtet werden kann.

### Bezugszeichen

- 1: Stator
- 2: Rotor
- 3: Rotorwelle
- 4,4A: Wälz-Lager
- 5,5A: Lageraußenring
- 6,6A: Lagerinnenring
- 7,7A: Wälzkörper
- 8: Isoliermaterial
- 9,9A: Wellenabsatz
- 10: Kühlmantel
- 11: Gehäuse

## Patentansprüche

1. Lageranordnung einer elektrischen Maschine mit einem Stator (1) und einem Rotor (2), wobei der Rotor (2) mit einer Rotorwelle (3) über Lager (4, 4A) gehäuseseitig gelagert ist, **dadurch gekennzeichnet, dass** die Lager (4, 4A) thermisch von der Rotorwelle (3) zum Reduzieren des Wärmeüberganges getrennt sind.

2. Lageranordnung nach Anspruch 1, **dadurch gekennzeichnet, dass** als Lager (4, 4A) Wälzlager vorgesehen sind, wobei jeweils zwischen einem Lagerinnenring (6, 6A) der Wälzlager und der Rotorwelle (3) ein Isoliermaterial (8) vorgesehen ist.

3. Lageranordnung nach Anspruch 2, **dadurch gekennzeichnet, dass** als Isoliermaterial (8) Klebstoff vorgesehen ist, mit dem zumindest ein Lagerinnenring (6, 6A) an der Rotorwelle (3) fixiert ist.

4. Lageranordnung nach einem der vorangehenden Ansprüche, **dadurch gekennzeichnet, dass** Fest-Los-Lager (4, 4A) vorgesehen sind, welche mit den Lagerinnenringen (6, 6A) jeweils an einem Wellenabsatz (9, 9A) der Rotorwelle (3) angeordnet sind.

5. Lageranordnung nach einem der vorangehenden Ansprüche, **dadurch gekennzeichnet, dass** die elektrische Maschine zum Antrieb eines Achsantriebes oder eines Einzelradantriebes eines Fahrzeuges vorgesehen ist.

6. Lageranordnung nach einem der vorangehenden Ansprüche, **dadurch gekennzeichnet, dass** als elektrische Maschine eine Hochdrehzahl-Asynchronmaschine oder eine permanenterregte Hochdrehzahl-Synchronmaschine vorgesehen ist.
